Europäisches Patentamt

European Patent Office

Office européen des brevets

(11) Veröffentlichungsnummer: **0 198 404**
**A2**

## (12) EUROPÄISCHE PATENTANMELDUNG

(21) Anmeldenummer: **86104829.6**

(22) Anmeldetag: **09.04.86**

(51) Int. Cl.⁴: **G 01 G 19/32,** G 01 G 13/02

(30) Priorität: **15.04.85 DE 3513398**

(43) Veröffentlichungstag der Anmeldung: **22.10.86**
**Patentblatt 86/43**

(84) Benannte Vertragsstaaten: **FR GB IT**

(71) Anmelder: **PME Pack-Matic Engineering GmbH, Sandweg 1, D-6304 Lollar (DE)**

(72) Erfinder: **Kammler, Roman, Dr. Ing., Wallstrasse 2, D-6520 Worms (DE)**
Erfinder: **Baur, Walter, Dr., Herzbergstrasse 37-39, D-6466 Gründau (DE)**

(74) Vertreter: **Patentanwälte Dipl.-Ing. R. Schlee Dipl.-Ing. A. Missling, Bismarckstrasse 43, D-6300 Giessen (DE)**

(54) **Verteilvorrichtung für Schüttgut, insbesondere für eine Kombinationswiegemaschine.**

(57) Ein Verteilbehälter (2) hat einen Boden (9), der Durchbrechungen (11 bis 18) aufweist. Von den Rändern (13a, 13b) der Durchbrechungen (11 bis 18) gehen ansteigende Rutschflächen (20, 19) aus, die die Bewegung von Schüttgut zu den Durchbrechungen (11 bis 18) hin erleichtern. Die Füllhöhe im Verteilbehälter (2) wird mit Hilfe einer Kraftmeßeinrichtung (29) konstant gehalten, von der aus die Zuführung von Schüttgut in den Verteilbehälter (2) geregelt wird. Unterhalb der Durchbrechungen (11 bis 18) sind Förderer, z.B. Förderrinnen (3) angeordnet, die das durch die Durchbrechungen (11 bis 18) austretende Schüttgut weiterfördern.

Mit Hilfe des Verteilbehälters (2) läßt sich eine besonders gleichmäßige Beschickung der Förderrinnen (3) erreichen.

PME Pack-Matic Engineering GmbH, D-6304 Lollar

*1*

Verteilvorrichtung für Schüttgut, insbesondere für eine Kombinationswiegemaschine

Beschreibung:

Die Erfindung bezieht sich auf eine Verteilvorrichtung für die Verteilung von Schüttgut auf mehrere Förderer, z.B.Förderrinnen, insbesondere für eine Kombinationswiegemaschine.

Bei einer bekannten Verteilvorrichtung dieser Art (DE-OS 34 09 806) ist eine mit einem Schwingantrieb gekoppelte tellerförmige Zentraleinheit vorgesehen. Das Schüttgut fällt auf diese Zentraleinheit und wird von dieser aus zu mehreren kreisförmig angeordneten Wiegeeinheiten einer Kombinationswiegemaschine verteilt. Die Zwischenräume zwischen Schwingförderrinnen, die radial von der Zentraleinheit ausgehen, sind mittels radialer Vorsprünge überdeckt, wodurch verhindert werden soll, daß das Schüttgut in die Zwischenräume fällt und daß das in einer Förderrinne sich bewegende Gut auf das in der Nachbarrinne befindliche Gut einwirkt und so eine unerwünschte Förderung vermieden wird.

Bekannt ist auch eine Verteilvorrichtung (DE-OS 34 09 388), die einen Verteilkörper aufweist, der abwechselnd radiale Rippen und Täler aufweist. Durch die Rippen sollen Agglomerate des zu fördernden Produktes zerteilt werden, bevor sie die zu den verschiedenen Wiegeeinheiten führenden Auslaßöffnungen am Umfang der Verteilvorrichtung erreichen.

Bei beiden bekannten Verteilvorrichtungen besteht die Gefahr, daß das Schüttgut ungleichmäßig auf die Förderrinnen fällt, so daß diese zeitweise überschüttet werden und zeitweise zu wenig Schüttgut erhalten. Der Produktstrom ist stark abhängig von der Zuführung des Schüttgutes zu der Verteilvorrichtung. Die Dosierung von Teilmengen durch Wiegebehälter der Kombinationswiegemaschine erfolgt dadurch, daß Schüttgut während einer gewissen Zeitspanne zugeführt wird. Wegen verschiedener Förderströme in den Förderrinnen ist es oft sehr schwierig, die Teilmenge mit der erforderlichen Genauigkeit einzuhalten. Auch durch eine Nachregelung kann nicht immer Abhilfe geschaffen werden, da sich auch hierbei die unterschiedlich starken Produktströme nachteilig auswirken.

Der Erfindung liegt die Aufgabe zugrunde, eine Verteilvorrichtung der eingangs genannten Art so auszubilden, daß die Förderer gleichmäßig mit Schüttgut versorgt werden.

Die zur Lösung dieser Aufgabe geschaffene Verteilvorrichtung der eingangs genannten Art ist gekennzeichnet durch einen Verteilbehälter mit einem Boden, der Durchbrechungen aufweist, wobei unterhalb jeder Durchbrechung ein Förderer angeordnet ist und eine Einrichtung zur Konstanthaltung der der Füllhöhe im Verteilbehälter.

Bei einer so ausgebildeten Verteilvorrichtung wird der Ausfluß des Schüttgutes durch die Durchbrechungen konstant gehalten, da durch die Konstanthaltung der Füllhöhe an jeder Durchbrechung der gleiche statische Druck herrscht. Damit wird auch ohne Nachregelung eine möglichst genaue Befüllung der einzelnen Teilmengen-Wiegebehälter erreicht.

Bei einer bevorzugten Ausführungsform der Erfindung (Anspruch 2) schließen an die Ränder der Durchbrechungen nach oben divergierende Rutschflächen an. Die Neigung dieser Rutschflächen kann an die Fließeigenschaften des jeweiligen Schüttgutes angepaßt werden, um einen möglichst günstigen Ausfluß des Schüttgutes zu erhalten. Mit Hilfe von Rutschflächen gemäß Anspruch 2 erreicht man ein sicheres Nachrutschen des Fördergutes auch ohne einen Schwingantrieb für den Verteilbehälter. Vorzugsweise laufen Rutschflächen, die benachbarten Durchbrechungen zugeordnet sind, an einem Grat zusammen (Anspruch 3). Der Boden des Behälters wird dann sozusagen durch mehrere dachartige Flächen gebildet. Die Durchbrechungen nehmen in Fließrichtung des Schüttgutes vorzugsweise zu (Anspruch 4), wodurch die gleichmäßige Beschickung der Förderer weiterhin verbessert wird.

Die Einrichtung zur Konstanthaltung der Füllhöhe hat vorzugsweise eine Wiegeeinrichtung. Bei Unterschreiten eines bestimmten Gewichtes wird Schüttgut zugegeben. Wenn ein vorgegebenes Gewicht erreicht wird, wird die weitere Zuführung von Schüttgut gestoppt. Die Konstanthaltung der Füllhöhe kann jedoch auch anders erreicht werden, insbesondere durch eine optische Abtastung der Oberfläche des Schüttgutes im Verteilbehälter und Regelung der Zufuhr entsprechend dem Ergebnis der Abtastung. Eine Einrichtung mit Wiegeeinrichtung ist vorzugsweise gemäß Anspruch 6 ausgebildet.

Die Verteilvorrichtung kann sowohl einen kreisrunden Verteilbehälter aufweisen (Anspruch 7) als auch einen geradlinigen Verteilbehälter, der z. B., in der Draufsicht gesehen, rechteckig ausgebildet ist (Anspruch 8). Die Durchbrechungen können gemäß Anspruch 9 verschieden groß sein, so daß Förderer verschiedener Leistung beschickt werden können.

In der Zeichnung sind Ausführungsbeispiele der Erfindung dargestellt. Es zeigen:

Fig. 1 eine Draufsicht auf eine Verteilvorrichtung, die kreisförmig ausgebildet ist entsprechend den Pfeilen I-I in Fig. 2,

Fig. 2 einen vertikalen Schnitt durch die Verteilvorrichtung nach Fig. 1 entsprechend der Linie II-II in Fig. 1,

Fig. 3 eine Draufsicht auf eine geradlinig ausgebildete Verteilvorrichtung entsprechend der
Linie III-III in Fig. 4 und

Fig. 4 einen vertikalen Schnitt durch die Verteilvorrichtung nach Fig. 3 entsprechend der Linie IV-IV in Fig. 3.

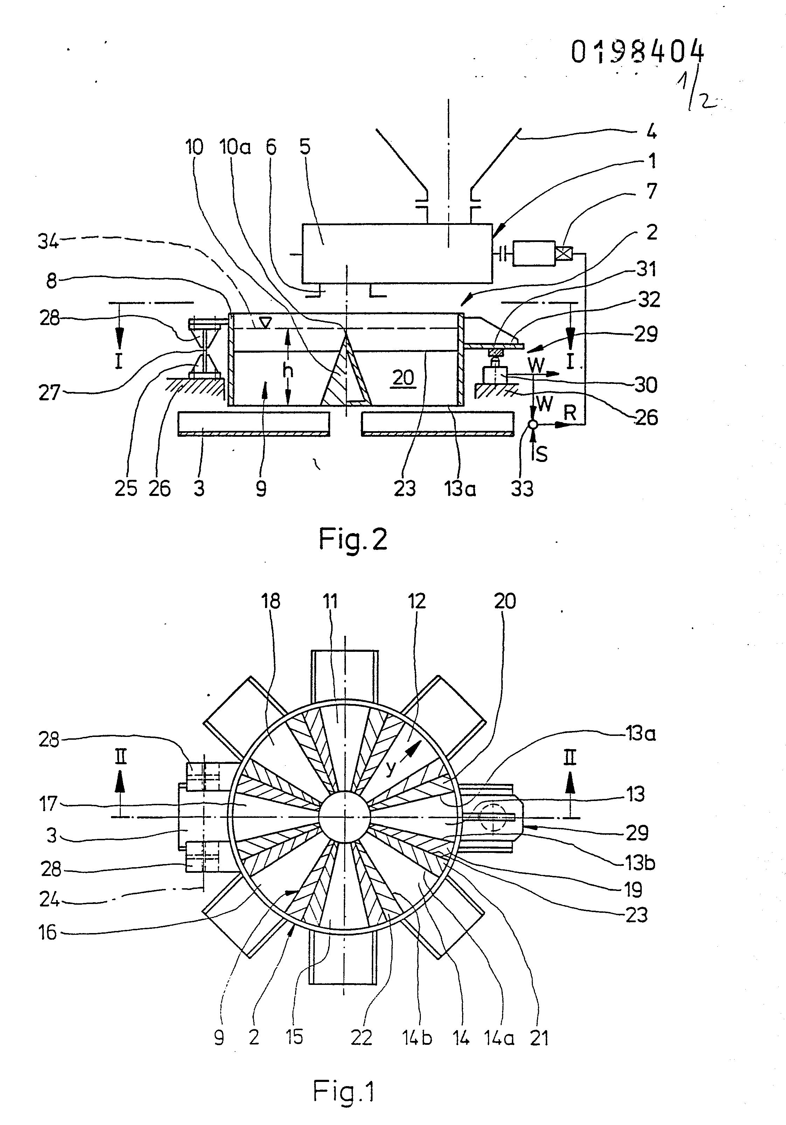

Die Verteilvorrichtung nach den Fig. 1 und 2 hat eine Schüttgut-Zuführeinrichtung 1, einen unterhalb der Zuführeinrichtung
angeordneten Verteilbehälter 2 und mehrere unterhalb des Verteilbehälters angeordnete Förderrinnen 3.

Die Zuführeinrichtung 1 besteht aus einem trichterförmigen
Behälter 4, der unten mittels eines Fördergerätes 5 abgeschlossen ist und das mittels eines stufenlos verstellbaren
Antriebsmotors 7 (oder eines Stellgetriebes) angetrieben ist
(Fig. 2), sowie aus einem Auslaufstutzen 6, dessen Achse über
der Achse des Zentralköpers 10 angeordnet ist.

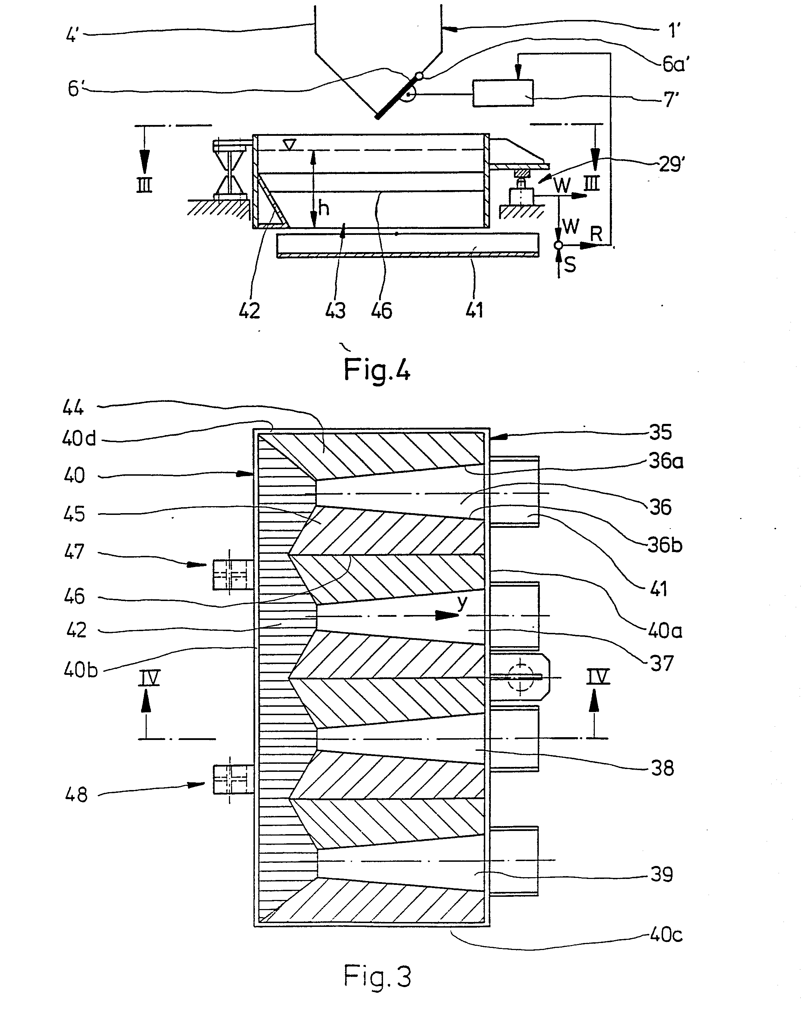

Die Zuführeinrichtung 1 kann auch aus einem trichterförmigen
Behälter 4' bestehen (Fig. 4), der unten mittels einer Verschlußklappe 6' abgeschlossen ist. Die Verschlußklappe 6'
ist mittels eines Antriebsmotors 7' um ein Gelenk 6a' schwenkbar. Gezeigt ist die geschlossene Stellung. Bei einer Schwenkung der Verschlußklappe 6' um das Gelenk 6a' entgegen zur Uhrzeigerrichtung wird die Ausflußöffnung des Behälters 4' geöffnet.

Der Verteilbehälter 2 hat eine zylindrische Wand 8 und einen
insgesamt mit 9 bezeichneten Boden. In der Mitte des Bodens
befindet sich ein pyramidenförmiger oder kegelförmiger Zentralkörper 10, der sich nach oben verjüngt. Im Boden befinden sich insgesamt acht Durchbrüche 11 bis 18. Die Durchbrüche sind etwa segmentförmig und können verschieden breit sein. Von jedem Rand jedes Durchbruches erhebt sich eine geneigte Rutschfläche. Betrachtet sei dies am Beispiel der Durchbrüche 13 und 14. Der Durchbruch 13 hat seitliche Ränder 13a und 13b und der Durchbruch 14 seitliche Ränder 14a und 14b. Vom Rand 13b erhebt sich eine Rutschfläche 19 und vom Rand 13a eine Rutschfläche 20. Vom Rand 14a erhebt sich eine Rutschfläche 21 und vom Rand 14b eine Rutschfläche 22. Bei dem gezeichneten Ausführungsbeispiel sind die Rutschflächen als schiefe Ebenen ausgebildet. Sie stoßen an ihren oberen Enden zusammen, so daß dort ein Grat 23 gebildet wird. Die Rutschflächen erstrecken sich von der äußeren zylindrischen Wand 8 bis zum Zentralkörper 10 hin. Wie man aus Fig. 2 ersieht, liegen die Grate 23 etwas tiefer als die Spitze 10a des Zentralkörpers 10.

Die Durchbrüche 11 bis 18 erweitern sich in der Förderrichtung Y, d.h. in der Richtung, in der das Schüttgut auf den Förderrinnen 3 fließt.

Der Verteilbehälter 2 ist derart beweglich aufgehängt, daß er um eine Achse 24 schwenken kann. Zum Zwecke der beweglichen Aufhängung sind zwei Lagerböcke 25 vorgesehen, die sich am Gestell 26 der Maschine befinden. An den Lagerböcken 25 sind Lenker 27 angelenkt, die mit Lenkerhaltern 28 am Verteilbehälter 2 verbunden sind. Diametral gegenüber der Behälterbefestigung mittels der Lenker 27 ist eine insgesamt mit 29 bezeichnete Kraftmeßeinrichtung angeordnet. Die Kraftmeßeinrichtung hat einen Kraftaufnehmer 30, der wiederum am Gestell 26 der Maschine befestigt ist. Auf den Kraftaufnehmer 30 wirkt eine Druckplatte 31 ein, die an einer am Verteilbehälter 2 befestigten Konsole 32 angeordnet ist.

Der Kraftaufnehmer gibt ein elektrisches Gewichtssignal W ab, das einen Wert hat, der proportional zu der im Verteilbehälter 2 befindlichen Schüttgutmenge ist. Das Gewichtssignal W wird in einer elektronischen Regel- und Steuereinrichtung 33, die in der Zeichnung nur als Punkt symbolisiert ist, mit einem Sollwert S verglichen. Aus dem Vergleich resultiert ein Differenzsignal R. Entsprechend dem Differenzsignal R wird auf den Antriebsmotor 7 (Stellmotor) eingewirkt.

Unterhalb eines jeden der Druchbrüche 11 bis 18 ist eine Förderrinne 3 angeordnet, so daß jede der Förderrinnen von einem bestimmten Durchbruch aus mit Schüttgut beschickt wird.

Die Verteilvorrichtung arbeitet wie folgt. Während des Betriebes wird im Verteilbehälter 2 eine bestimmte Höhe des Füllgutes aufrechterhalten, z. B. eine mittlere Füllhöhe, wie sie durch die gestrichelte Linie 34 angedeutet ist. Geringe Füllhöhenschwankungen um diesen Sollwert sind naturgemäß unvermeidbar, sollen aber so gering wie möglich gehalten werden. Das Konstanthalten der Füllhöhe erfolgt mit Hilfe der bereits beschriebenen Regeleinrichtung. Einer bestimmten Füllhöhe entspricht bei einem gegebenen Produkt ein gewisses Gewicht der eingefüllten Schüttgutmenge. Wenn dieses Gewicht gegeben ist, ist das Signal W gleich dem Signal S, so daß das resultierende Signal R eine Betätigung des Förderorganes 5 oder der Verschlußklappe 6' nicht auslöst. Nimmt die Füllhöhe ab, so stimmt das Gewichtssignal W nicht mehr mit dem Sollwert überein, und es entsteht ein Differenzsignal R, das eine Bewegung des Stellmotors 7 derart bewirkt, daß die Fördergeschwindigkeit des Zuführfördergerätes 5 vergrößert wird oder daß die Klappe 6' geöffnet wird. Das Gewicht der Schüttgutmenge vergrößert sich nun. Wenn es so groß geworden ist, daß der Sollwert S überschritten wird, wird der weitere Zustrom gedrosselt oder auch ganz abgestellt.

Der Zustrom zu den Förderrinnen 3 wird durch die Füllhöhe h und durch den jeweiligen Querschnitt des der Rinne zugeordneten Durchbruches bestimmt. Die Durchbrüche können gleich aber auch verschieden groß sein entsprechend dem Ziel, die verschiedenen Förderrinnen verschieden stark zu beschicken.

Während in den Fig. 1 und 2 eine Ausführungsform dargestellt ist, bei der der Verteilbehälter kreisrund ist, zeigen die Fig. 3 und 4 eine Ausführungsform mit rechteckigem Verteilbehälter 35. Während gemäß den Fig. 1 und 2 die verschiedenen Durchbrüche am Boden des Verteilbehälters strahlenförmig vom Zentrum des Behälters ausgehen, sind die Durchbrüche 36 bis 39 parallel zueinander und verlaufen rechtwinklig zu einer langen Wand 40a einer rechteckigen Zarge 40 des Verteilbehälters 35. Entsprechend sind auch die Förderrinnen 41 parallel zueinander und nicht strahlenförmig angeordnet, wie dies in Fig. 1 dargestellt ist. Außerdem wurde in den Fig. 1 und 2 eine Ausführungsform dargestellt, die einen Förderer 5 hat, dessen Fördergeschwindigkeit stufenlos verstellbar ist, während in Fig. 4 eine Zuführeinrichtung mit verstellbarer Klappe 6' dargestellt ist.

Von der langen Zargenwand 40b geht eine schiefe Rutschebene 42 aus, die zum Boden 43 des Verteilbehälters 35 hin stark abfällt. Auch bei dieser Ausführungsform gehen von den Rändern (z.B. 36a, 36b) der Durchbrüche Rutschflächen 44, 45 aus, wobei die Rutschflächen, die den kurzen Zargenwänden 40c, 40d nicht benachbart sind, an Graten 46 zusammenstoßen. Im Gegensatz zu der Ausführung nach den Fig. 1 und 2 nimmt die Breite der Rutschflächen 44, 45 in Förderrichtung Y ab. Dies ergibt sich auch daraus, daß die Breite der Druchbrüche 36 in Förderrichtung Y zunimmt.

Die hier mit 1' bezeichnete Schüttgut-Zuführeinrichtung hat einen Behälter 4', der länglich ausgebildet ist, so daß er sich, in der Draufsicht gesehen, parallel zu den langen Seiten 40a, 40b der Zarge 40 des Verteilbehälters erstreckt.

Der Verteilbehälter 35 ist in gleicher Weise aufgehängt wie der Verteilbehälter 2 nach den Fig. 1 und 2, nämlich mittels insgesamt mit 47 und 48 bezeichneten gelenkigen Aufhängungen und einer Kraftmeßeinrichtung 29'. Die Funktion ist gleich, wie dies bereits anhand der Fig. 1 und 2 beschrieben wurde, so daß eine Wiederholung entbehrlich ist.

In der Zeichnung sind als Rutschflächen ebene Flächen dargestellt. In Betracht kommen jedoch auch gekrümmte Flächen. Wesentlich ist, daß die Rutschflächen überall zu den Rändern der Durchbrechungen hin abfallen.

Ansprüche:

1. Verteilvorrichtung für die Verteilung von Schüttgut auf mehrere Förderer, z. B. Förderrinnen, insbesondere für eine Kombinationswiegemaschine, gekennzeichnet durch einen Verteilbehälter (2; 35) mit einem Boden (9; 43), der Durchbrechungen (11 bis 18; 36 bis 39) aufweist, wobei unterhalb jeder Durchbrechung ein Förderer (3; 41) angeordnet ist und eine Einrichtung (29; 29') zur Konstanthaltung der Füllhöhe (h) im Verteilbehälter (2; 35).

2. Verteilvorrichtung nach Anspruch 1, dadurch gekennzeichnet, daß an die Ränder (13a, 13b, 14a, 14b; 36a, 36b) der Durchbrechungen (11 bis 18; 36 bis 39) nach oben divergierende Rutschflächen (20, 19, 21, 22; 44, 45) anschließen.

3. Verteilvorrichtung nach Anspruch 1, dadurch gekennzeichnet, daß von benachbarten Rändern (13b, 14a) benachbarter Durchbrechungen (13, 14) Rutschflächen (19, 21) an einem scharfkantigen oder abgerundeten Grat (23; 46) zusammenstoßen.

4. Verteilvorrichtung nach einem der vorhergehenden Ansprüche, dadurch gekennzeichnet, daß sich die Durchbrechungen (11 bis 18; 36 bis 39) in Förderrichtung (Y) der Förderer (3; 41) verbreitern, vorzugsweise linear.

5. Verteilvorrichtung nach einem der vorhergehenden Ansprüche, dadurch gekennzeichnet, daß die Einrichtung zur Konstanthaltung der Füllhöhe (h) eine Wiegeeinrichtung (29; 29') und eine in Abhängigkeit von deren Anzeige (W) betätigbare Zuführeinrichtung (1; 1') für Schüttgut aufweist.

6. Verteilvorrichtung nach Anspruch 5, dadurch gekennzeichnet, daß der Verteilbehälter (2; 35) auf mindestens einem Kraftmesser (29; 29') abgestützt ist, der ein elektrisches Gewichtssignal (W) abgibt und daß ein Regler (33) vorgesehen ist, der das Gewichtssignal (W) mit einem Sollwert (S) vergleicht und ein resultierendes Differenzsignal (R) abgibt, durch das die Zuführeinrichtung (1; 1'), z. B. das Förderorgan (5) der Zuführeinrichtung (1) oder die Verschlußklappe (6') eines Zuführtrichters (4'), steuerbar ist.

7. Verteilvorrichtung nach einem der vorhergehenden Ansprüche, dadurch gekennzeichnet, daß der Verteilbehälter (2) kreisrund ausgebildet ist und die Durchbrechungen (11 bis 18) sich radial erstrecken, vorzugsweise etwa segmentförmig ausgebildet sind (Fig. 1, 2).

8. Verteilvorrichtung nach einem der Ansprüche 1 bis 6, dadurch gekennzeichnet, daß der Verteilbehälter (35) geradlinig, in der Draufsicht gesehen vorzugsweise rechteckig, ausgebildet ist, wobei die Durchbrechungen (36 bis 39) parallel zueinander verlaufen, in der Draufsicht gesehen vorzugsweise rechtwinklig zu einer langen Rechteckseite (40a).

9.  Verteilvorrichtung nach einem der vorhergehenden Ansprüche, dadurch gekennzeichnet, daß die Durchbrechungen verschieden groß sind.

0198404

1/2

Fig.2

Fig.1

Fig.4

Fig.3